# EUROPÄISCHE PATENTANMELDUNG

(11) **EP 3 480 140 A1**
(43) Veröffentlichungstag der Anmeldung: **08.05.2019**
(21) Anmeldenummer: 18000849.2
(22) Anmeldetag: 30.10.2018
(51) Int. Cl.: B65G 9/00, B65G 13/075

(54) **WERKSTÜCKTRANSPORTSYSTEM MIT ABBREMSBAREN TRANSPORTRÄDERN ODER TRANSPORTROLLEN**

(30) Priorität: 31.10.2017 DE 102017010091
(71) Anmelder: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang

(57) **Zusammenfassung**

Die Erfindung betrifft ein Werkstücktransportsystem für das ungetaktete Fördern von durch Hangabtrieb bewegten Werkstücken auf schienengeführten radgelagerten Transportwagen oder auf rotierbar gelagerten Transportrollen einer Rollenbahn, wobei ein Teil der Transportwagenräder oder ein Teil der Transportrollen der Rollenbahn abbremsbar ist. Dabei ist zwischen mindestens einem bremsbaren - durch den Werkstücktransport in Rotation versetzten - Transportwagenrad und dem Fahrgestell des Transportwagens oder zwischen einer bremsbaren - durch den Werkstücktransport in Rotation versetzten - Transportrolle und dem Rahmengestell der Rollenbahn eine elektrische Maschine in Form eines Generators angeordnet. Der einzelne Generator ist mit mindestens einem Bremswiderstand beschaltet.

Mit der vorliegenden Erfindung wird ein Werkstücktransportsystem geschaffen, das auf Gefällestrecken die Geschwindigkeit der transportierten Werkstücke begrenzt und/oder abbremst.

## Beschreibung

Die Erfindung betrifft ein Werkstücktransportsystem für das ungetaktete Fördern von durch Hangabtrieb bewegten Werkstücken auf schienengeführten radgelagerten Transportwagen oder auf rotierbar gelagerten Transportrollen einer Rollenbahn, wobei ein Teil der Transportwagenräder oder ein Teil der Transportrollen der Rollenbahn abbremsbar ist.

Aus der WO 2012/150036 A1 ist ein Laufwagen mit einem Bremsmodul für einen Schwerkrafthängeförderer bekannt. Der zwischen zwei Schienen geführte Laufwagen hat eine Vorderachse, die zwischen den Rädern von einem Gehäuse umgeben ist, in dem ein Bremsmodul angeordnet ist. Im Bremsmodul sitzen zwei miteinander kämmende Zahnräder, von denen eines auf der Vorderachse befestigt ist. Die Zahnräder pumpen als Zahnradpumpe das Hydrauliköl über eine Drosselstelle in einen Kreislauf um. Derartige Bremsmodule können nicht in Laufwagen verwendet werden, die in Reinsträumen oder lebensmittelverarbeitenden Anlagen eingesetzt werden.

Die DE 1 278 936 AS beschreibt eine Verzögerungsvorrichtung für Laufrollen. Die Laufrollen sind u.a. in einem Rahmen gelagert, der Teil einer geneigten Bahn ist, auf der unter Schwerkraftwirkung Lasten bewegt werden. Zur Bildung einer Wirbelstrombremse sind in den Stirnflächen der Laufrollen in Umfangsrichtung nebeneinanderliegende Permanentmagnete mit abwechselnder Polung angeordnet. Den Stirnflächen der Laufrollen gegenüber sind in geringem Abstand Metallplatten für den magnetischen Rückschluss angeordnet.

Der vorliegenden Erfindung liegt die Problemstellung zugrunde, ein Werkstücktransportsystem mit abbremsbaren Transporträdern oder Transportrollen zu schaffen, das auf Gefällestrecken die Geschwindigkeit der transportierten Werkstücke begrenzt und/oder abbremst.

Diese Problemstellung wird mit den Merkmalen des Hauptanspruchs gelöst. Dabei ist zwischen mindestens einem bremsbaren - durch den Werkstücktransport in Rotation versetzten - Transportwagenrad und dem Fahrgestell des Transportwagens oder zwischen einer bremsbaren - durch den Werkstücktransport in Rotation versetzten - Transportrolle und dem Rahmengestell der Rollenbahn eine elektrische Maschine in Form eines Generators angeordnet. Der einzelne Generator ist mit mindestens einem Bremswiderstand beschaltet.

Innerhalb des Werkstücktransportsystems wird die potentielle Energie des Transportwagens und der transportierten Werkstücke beim Eintritt in ein Gefälle des Transportweges in Teilen des Systems zunächst in kinetische Energie und dadurch zumindest teilweise bis großteils über den Umweg der Transformation in elektrische Energie in thermische Energie umgewandelt. Dabei wird die Abwärtsfahrt des Werkstücks geregelt oder ungeregelt abgebremst.

Die Umwandlung in kinetische Energie erfolgt bei einem schienengebunden Transport im einem Bremsstrang des das Werkstück tragenden Transportwagens. Dazu weist der Bremsstang mindestens ein an der Schiene abrollendes mittels Kraft-, Reib- und/oder Formschluss in Rotation versetztes Transportwagenrad auf. Für die Umwandlung in thermische Energie treibt dieses Rad einen nachgeschalteten Generator mit ggf. vorgeschaltetem Getriebe an. Im Generator wird aus der Bewegungsenergie elektrische Energie. Der erzeugte Generatorstrom wird dann in einem oder mehreren Bremswiderständen in Wärme umgewandelt. Bei einer Rollenbahn ergeben sich vergleichbare Umwandlungsvorgänge unter Einsparung eines Transportwagens. Hier versetzt das abwärtsfahrende Werkstück oder Transportgut über Kraft- und Reibschluss die Transportrollen der Rollenbahn in Rotation. Dabei treiben einige Transportrollen an- oder eingebaute Generatoren an.

In der Regel ist das Werkstücktransportsystem ein passives System, das autark und weitgehend verschleißfrei arbeitet.

Weitere Einzelheiten der Erfindung ergeben sich aus den Unteransprüchen und der nachfolgenden Beschreibung mindestens einer schematisch dargestellten Ausführungsform.
- Figur 1:: perspektivische Ansicht eines an einer Fahrschiene hängenden Transportwagens;
- Figur 2:: perspektivische Ansicht eines kurzen Ausschnitts einer hängenden Fahrschiene mit Hangabtriebsbereich;
- Figur 3:: Seitenansicht einer Rollenbahn mit durch Hangabtrieb bewegtem Werkstück;
- Figur 4:: vertikaler Teillängsschnitt der unteren Transportrolle des Hangabtriebsbereichs der Rollenbahn nach Figur 3 mit angekuppeltem Generator.

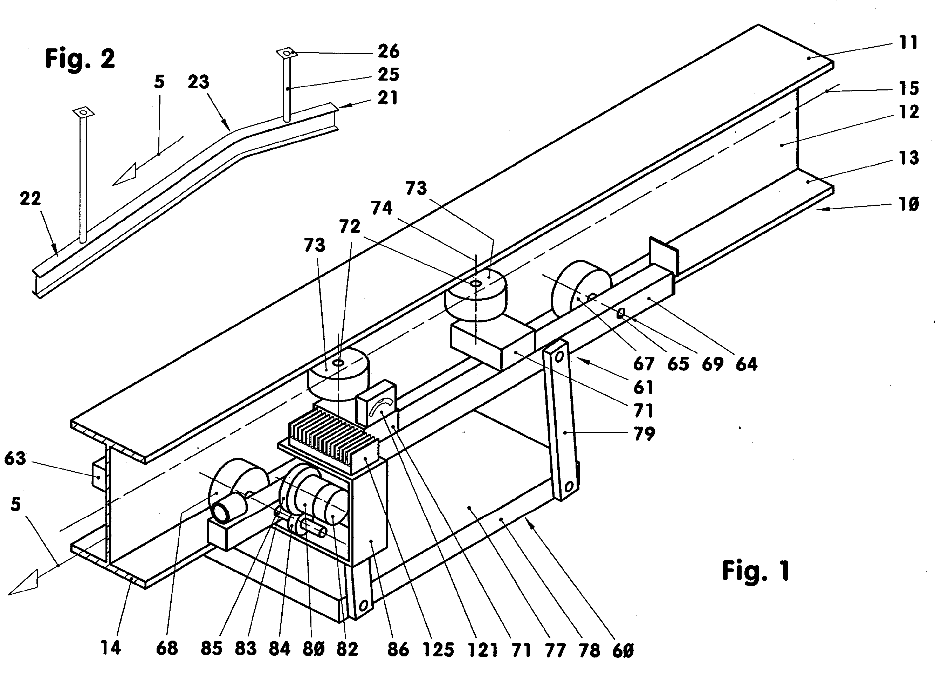

Die Figur 1 zeigt einen kurzen Abschnitt einer Fahrschiene (10), in der ein z.B. achträdriger Transportwagen (60) eingehängt ist. Die Fahrschiene (10), die der reale Teil einer geometrischen Bahnkurve (30) ist, ist in Figur 2 als kurzer Ausschnitt dargestellt. Hier geht ein kurzer horizontaler Abschnitt (21) in einen fallenden Abschnitt (22) über.

Die Fahrschiene (10) ist hier beispielsweise ein I-Profil-Stahlträger nach DIN 1025. Er besteht aus einem untenliegenden Zugflansch (11), einem obenliegenden Druckflansch (13) und einem beide Flansche (11, 13) auf Abstand haltenden Steg (12). Die beiden Flansche (11, 13) sind parallel zueinander ausgerichtet und sind jeweils plattenförmig ausgebildet, so dass die Oberseite und die Unterseite des einzelnen Flansches zueinander in parallelen Ebenen liegen. Der Steg (12) ist senkrecht ausgerichtet und mittig zwischen den beiden Flanschen (11, 13) angeordnet. Die geometrische Mitte des I-Profilquerschnitts (14) wird senkrecht von der Seele (15) der Fahrschiene (10) geschnitten. Bei der Verlegung der Fahrschiene (10) ist der Steg (12) des I-Profils (10) in der Regel vertikal ausgerichtet. Eine Abweichung der Stegneigung von bis zu drei Winkelgraden gegenüber der Vertikalen ist denkbar.

Der horizontale Abschnitt (21) geht nach Figur 1 beispielsweise stetig - mittels eines Kreisbogenabschnittes (23) - in den fallenden Abschnitt (22) über. Die Fahrschiene (10) ist z.B. mittels vertikal orientierter Tragrohre (25) aufgehängt. Die am Druckflansch (13) befestigten Tragrohre (25) weisen für eine Deckenmontage z.B. quadratische Flansche (26) auf.

Die Figur 1 zeigt schematisch einen Transportwagen (60). Letzterer besteht im Wesentlichen aus einem Fahrgestell (61) und einer die Nutzlast aufnehmenden Basisplatte (77). Die Basisplatte (77) ist hier z.B. eine ebene rechteckige unter der Fahrschiene (10) hängende Platte. An den beiden Längsseiten (78) der Basisplatte (77) sind jeweils zwei nach oben ragende Tragstäbe (79) befestigt.

Je zwei Tragstäbe (79) einer Längsseite (78) der Basisplatte (77) tragen einen Längsholm (63, 64). Jeder Längsholm (63, 64) lagert vorn und hinten ein Transportwagenrad (67, 78). Die Mittellinien (69) der einzelnen tragenden Transportwagenräder (67, 78) sind im Idealfall senkrecht zum Steg (12) der Fahrschiene (10) ausgerichtet. Die Tragräder (67, 68) stehen auf dem Zugflansch (11) der Fahrschiene (10) auf. Bis auf das in Figur 1 vorn liegende Tragrad, das ein Antriebsrad (68) ist, sind alle Tragräder (67) - z.B. wälzgelagert - auf einer im jeweiligen Längsholm (63, 64) befestigten Tragachse (65) gelagert.

Auf dem einzelnen Längsholm (63, 64) sind in dem jeweils zwischen den Tragrädern (67, 68) gelegenen Bereich jeweils zwei Abstützräder (73) angeordnet, die zumindest zeitweise bei fahrenden Transportwagen (60) den Steg (12) der Fahrschiene (10) abrollend kontaktieren. Die Mittellinien (74) der Abstützräder (73) sind - zumindest auf einem geraden Abschnitt der Fahrschiene (10) - senkrecht zum Zugflansch (11) der Fahrschiene (10) orientiert. Dazu sitzen die Abstützräder (73) z.B. wälzgelagert auf starren Abstützachsen (72). Letztere werden jeweils von einem zum Steg (12) der Fahrschiene (10) hin ausgerichteten Kragarm (71) getragen. Je zwei Kragarme (71) sind an einem Längsholm (63, 64) befestigt.

Die Abstützräder (73) sind am Fahrgestell (61) in der Regel so angeordnet, dass der lichte Abstand zweier - durch den Steg (12) getrennter - sich spiegelbildlich gegenüberliegender Abstützräder (73) einige zehntel Millimeter größer ist als die maximale Wandstärke des Stegs (12) der Fahrschiene (10). Folglich liegt der Transportwagen (60) quer zur Fahrtrichtung (5) mit Spiel am Steg (12) an.

Alternativ können die Abstützräder (73) elastisch vorgespannt am Steg (12) anliegen und so den Transportwagen (60) ohne seitliches Spiel führen. Die elastische Vorspannung kann zum einem durch ein federndes Abstützen der Abstützräder (73) oder eines Teils der Abstützräder am Fahrgestell (61) erfolgen. Zum anderen können die Abstützräder (73) bei starrer Montage am Fahrgestell (61) z.B. aufgrund einer elastischen Bereifung geringfügig vorgespannt am Steg (12) anliegen.

Nach Figur 1 ist das vorn liegende Antriebsrad (68) mittels einer Antriebswelle (85) im Längsholm (64) gelagert. Die Antriebswelle (85) trägt an ihrem freien Ende ein Antriebszahnrad (84). Das Antriebsrad (68) ist somit ein Antriebselement für einen nachgeschalteten Generator (80).

Im Ausführungsbeispiel ist parallel zur Antriebswelle (85) oberhalb dieser der Generator (80) am Längsholm (64) gelagert. Auf der Welle des Generators (80) sitzt ein Bremszahnrad (83), das mit dem Antriebszahnrad (84) kämmt. Hier ist das Bremszahnrad (83) z.B. größer als das Antriebszahnrad (84). Der Generator (80) und die beiden Zahnräder (83, 84) werden von einem eine Art Gehäuse bildenden Schutzbügel (86) umgeben.

Der Generator (80) ist beispielsweise mit einem Tachogenerator (82) ausgestattet. Der Tachogenerator erzeugt eine zur Geschwindigkeit weitgehend proportionale Gleichspannung. Diese Spannung repräsentiert dabei einen Geschwindigkeitswert. Anstelle des Tachogenerators kann auch ein Drehmelder, ein inkrementaler Geber oder ein Wechselstromgenerator genutzt werden.

Auf dem in Figur 1 vorn liegenden Kragarm (71) ist ein Neigungssensor (121) befestigt. Letzterer misst den Neigungswinkel des Fahrgestells (61) gegenüber der in Fahrtrichtung (5) gelegenen Horizontalen mit der Erdanziehungsrichtung als Bezugssystem. Der Neigungssensor (121) kann auf einem kapazitiven oder elektrolytischen Funktionsprinzip basieren. Auch ein Pendelpotentiometer oder ein auf einer Flüssigkeitsleitfähigkeit basierender Neigungssensor ist denkbar. Als einfachste Variante kann auch ein Quecksilberschalter benutzt werden, bei dem ein in einem Glasrohr hermetisch eingeschlossener Quecksilbertropfen ab einer vorgegebenen Glasrohrneigung zwei elektrische Kontakte leitend verbindet.

Der Generator (80), z.B. ein Gleichstromgenerator, besteht u.a. aus einer zu einer Leiterschleife gewickelten Wicklung, die sich um die Generatormittellinie in einem z.B. konstanten Magnetfeld bewegt. Die beiden Drahtenden der Wicklung enden in je zwei - auf der Generatorwelle (81) angeordneten - einander gegenüberliegenden Lamellen eines Kollektors. Am Kollektor liegen pro Wicklung zwei Schleifkontakte an.

Die vom Magnetfeld durchflossene Fläche der einzelnen rotierenden Wicklung ändert sich bei rotierender Generatorwelle (81) periodisch von Null bis zu ihrem vollen Wert. Der dabei in die Wicklungen induzierte Strom wird über den Kollektor einem äußeren Stromkreis zugeführt. Das Magnetfeld kann durch einen Permanentmagnet oder fremderregt durch eine Spule erzeugt werden.

Im äußeren Stromkreis bzw. im Ankerkreis, z.B. beim Nebenschlussgenerator, ist ein Bremswiderstand (125) integriert, in dem die Bremsenergie zumindest teilweise in Wärme umgewandelt wird. In einem Ausführungsbeispiel ist der über den Bremswiderstand (125) geführte Strom durch den Neigungssensor (121) unterbrochen, solange sich der Transportwagen (60) nicht auf einer Gefällestrecke (22) befindet. Hierdurch erzeugt der Generator (80) in Kombination mit dem Bremswiderstand (125) als Widerstandsbremse auf Horizontalstrecken (22) und Steigungsstrecken nur einen minimalen Fahrwiderstand. Letzterer ergibt sich aus dem Reibungswiderstand des Getriebes und dem Widerstand aufgrund der Beschleunigung der trägen Massen der rotierenden Generator- und Getriebeteile.

Im einfachsten Fall wird der Bremswiderstand auf den Gefällestrecken über einen Quecksilberschalter zugeschaltet. Soll die Geschwindigkeit des Transportwagens (60) auf der Gefällestrecke (22) geregelt werden, steuert der Neigungssensor (121) z.B. elektronische Schalter, die verschiedene Bremswiderstände nach Bedarf zuschalten. Ggf. steuert der Neigungssensor (121) den Widerstand eines Regelwiderstandes. Der einzelne Bremswiderstand kann auch ein anderer ohmscher Verbraucher wie z.B. eine Glühlampe sein.

Für eine Regelung wird die Geschwindigkeit des Transportwagens (60) z.B. über den am Generator (80) angeordneten Tachogenerator (82) ermittelt. Die Energieversorgung der Regelung erfolgt über einen Energiespeicher oder eine Energiezufuhr, wie sie für das nächste Ausführungsbeispiel beschrieben ist. Steht dem jeweiligen Transportwagen (60) genug Energie zur Verfügung, ist es auch denkbar, den Generator (80) z.B. mittels einer elektromechanischen, einer elektromagnetischen, einer drehzahlabhängigen Viskosekupplung oder dergleichen vom Antriebselement (68) abzukuppeln.

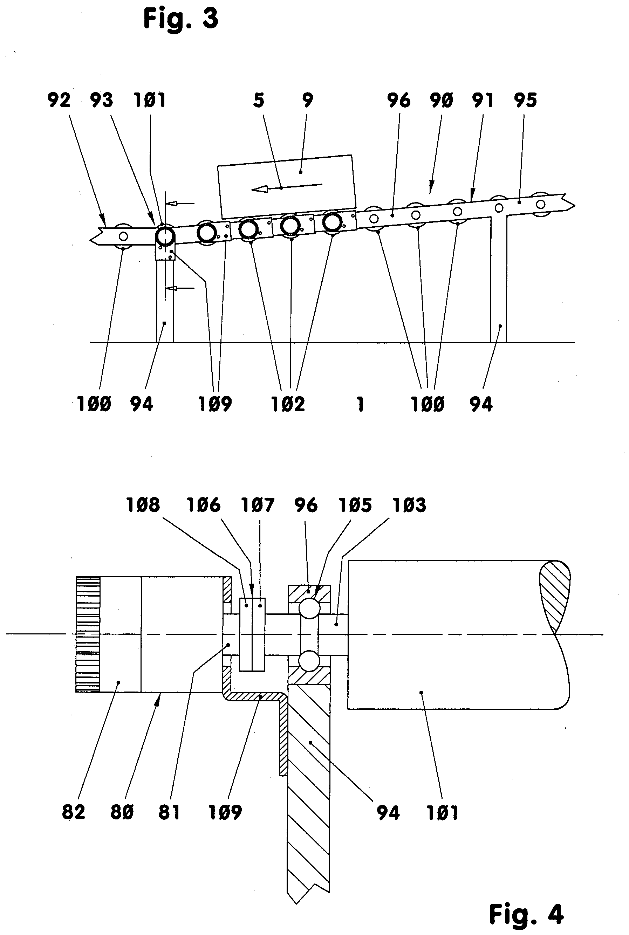

Alternativ zum Transportwagen (60) kann für die Weitergabe von Werkstücken (9) auch eine Rollenbahn (90) verwendet werden, vgl. Figur 3. Eine Rollenbahn (90) besteht aus einem rahmenartigen Gestell (95), in dem viele Transportrollen (101) hintereinander angeordnet sind. Dabei ist der geringste Abstand zwischen zwei nebeneinanderliegenden Transportrollen (100-102) so groß, dass immer mindestens zwei Transportrollen das zu transportierende Werkstück (9) tragen. Nur so ist ein Abkippen des Werkstücks (9) zwischen den Transportrollen (100-102) zu vermeiden. Auf geraden Abschnitten der Rollenbahn (90) sind die benachbarten Transportrollen (100-102) parallel zueinander ausgerichtet.

Die Figur 3 zeigt einen kleinen Teil einer auf einer ebenen Aufstellfläche (1) angeordneten Rollenbahn (90), der aus einer Gefällestrecke (91) und einer daran anschließenden Horizontalstrecke (92) besteht. Auf der Gefällestrecke (91) bewegt sich - angetrieben durch die Schwerkraft - das Werkstück (9) abwärts.

Die Rollenbahn (90) basiert auf einem Rahmengestell (95), das über z.B. vertikale Stützen (94) auf der Aufstellfläche (1) ruht. Das Rahmengestell (95) selbst ist leiterartig aufgebaut. Dazu hat es zwei Längsträger (96), die durch - hier nicht dargestellte - Querholme auf Abstand gehalten werden. Zwischen den Längsträgern (96) sind die Transportrollen (101) wälzgelagert angeordnet. Zwischen jeweils zwei Rollengruppen aus mehreren Transportrollen (100-102) ist ein Querholm angeordnet. Die Höhe der Querholme ist nicht größer als die Höhe der Längsträger (96).

Beispielsweise sind im unteren Bereich der Gefällestrecke (91) nebeneinander mehrere - z.B. fünf - als Bremsrollen bezeichnete bremsbare Transportrollen (101, 102) eingebaut. Eine einzelne Bremsrolle (101, 102) ist hierbei ein Antriebselement für einen mit ihr gekuppelten Generator (80). Im Ausführungsbeispiel nach Figur 3 ist die unterste Bremsrolle (101) z.B. genau an der Übergangsstelle (93) zwischen der Gefällestrecke (91) und der anschließenden Horizontalstrecke (92) angeordnet.

In Figur 4 ist die untere Bremsrolle (101) aus Figur 3 im Teilschnitt dargestellt. Die Blickrichtung des Teilschnittes ist in Figur 3 dargestellt. Die Bremsrolle (101) hat eine an ihr drehfest angeordnete Bremsrollenwelle (103), die linksseitig in einem Kupplungsflansch (107) endet. Zwischen der rechtsseitigen Stirnfläche der Bremsrolle (101) und dem bremsrollenseitigen Kupplungsflansch (107) ist die Bremsrollenwelle (103) im Längsträger (96) über ein als Festlager ausgebildetes Kugellager (105) gelagert. An der linken vertikalen Stütze (94) des Längsträgers (96) ist der Generator (80) mittels eines Doppelwinkels (109) befestigt. Die Generatorwelle (81) endet rechtsseitig in einem Kupplungsflansch (108), der dem Kupplungsflansch (107) der Bremsrolle (101) gegenüberliegt. Beide Kupplungsflansche (107, 108) gehören zu einer Wellenkupplung (106).

Die beiden Kupplungsflansche (107, 108,) können längs-, quer- und winkelbeweglich miteinander gekuppelt sein. Zudem können zwischen den Kupplungsflanschen (107, 108) zur Herstellung einer Drehelastizität ein oder mehrere Elastomerkörper eingebaut sein.

Im Ausführungsbeispiel ist rückseitig am Generator (80) ein Tachogenerator (82) angeordnet. Zwischen dem generatorseitigen Kupplungsflansch (108) und dem Generator (80) ist beispielsweise ein Übersetzungsgetriebe ins Schnelle angeordnet, sodass die Eingangsdrehzahl des Generators (80) immer größer ist als die Drehzahl der jeweiligen Bremsrolle (101, 102). Das Übersetzungsgetriebe kann auch im Gehäuse des Generators (80) integriert sein.

In der Figur 3 sind die in der Gefällestrecke (91) oberhalb der Bremsrolle (101) gelegenen Bremsrollen (102) so angeordnet, dass der einzelne Doppelwinkel (109) in Richtung des Längsträgers (96) orientiert ist.

Selbstverständlich ist es auch möglich, entgegen dem Ausführungsbeispiel nach den Figuren 3 und 4, den einzelnen Generator jeweils in eine zumindest bereichsweise ausgehöhlte Bremsrolle (101, 102) zu integrieren. Hierbei stützt sich dann z.B. die Generatorwelle drehfest an mindestens einem der Längsträger (96) ab, während die Bremsrolle (101, 102) auf der Generatorwelle als Rotor umläuft. Dabei werden die Beschaltung des Generators und der oder die Bremswiderstände ebenfalls in der Bremsrolle (101, 102) untergebracht.

Bei Rollenbahnen (90) werden die Bremsrollen (101, 102) in der Regel nur in den Gefällestrecken (91) eingebaut. Dadurch kann in der einfachsten Variante der pro Bremsrolle (101, 102) benutzte Generator (80) auch ohne Tachogenerator verwendet werden. Hier wird der Ankerkreis des Generators (80) direkt auf einem Bremswiderstand geschaltet, so dass jedes Werkstück (9) abgebremst wird, sobald es die Bremsrolle (101, 102) in Rotation versetzt.

Werden auf der Rollenbahn unterschiedlich schwere Werkstücke (9) eingesetzt, kann es durch einen stark variierenden Hangabtrieb erforderlich sein, die Bremswirkung der Bremsrollen (101, 102) gesteuert unterschiedlich stark einzustellen. Dazu wird drehzahlabhängig der Bremswiderstand verändert. Eine Steuerung wertet die vom Tachogenerator (82) gelieferten drehzahlproportionalen Signale aus und erhöht mit zunehmender Bremsrollendrehzahl den Bremswiderstand. Die für die Steuerung erforderliche elektrische Energie liefert der Generator (80) selbst. Sie wird in einem Akkumulator oder einem Kondensator als Energiespeicher dafür zwischengespeichert. Hierbei können mehrere Bremsrollen einen Energiespeicher speisen. Zugleich können die Steuerungen mehrerer Bremsrollen aus diesem einen Energiespeicher versorgt werden. Eine Fremdversorgung der Steuerungen mittels einer Batterie oder eines externen Stromnetzes ist ebenfalls denkbar.

Kombinationen der in den Figuren gezeigten Ausführungsbeispiele sind denkbar.

### Bezugszeichenliste:

- 1: Aufstellfläche, Hallenboden
- 5: Fahrtrichtung des Transportwagens oder des Werkstücks
- 9: Werkstück, Transportgut

- 10: Fahrschiene, I-Profil
- 11: Zugflansch, unten
- 12: Steg
- 13: Druckflansch, oben
- 14: Querschnitt, I-Profilquerschnitt
- 15: Seele

- 21: Abschnitt, horizontal, Horizontalstrecke
- 22: Abschnitt, fallend; Hangabtriebsabschnitt; Gefällestrecke
- 23: Kreisbogenabschnitt
- 25: Tragrohre
- 26: Flansche, z.B. quadratisch

- 30: Bahnkurve

- 60: Transportwagen
- 61: Fahrgestell
- 63, 64: Längsholm, rechts, links
- 65: Tragachse
- 67: Tragräder, Räder, Transportwagenräder
- 68: Antriebsrad, Rad, Transportwagenrad, Antriebselement
- 69: Mittellinien

- 71: Kragarme, vorn, hinten
- 72: Abstützachsen
- 73: Abstützräder, Räder, Transportwagenräder
- 74: Mittellinien

- 77: Basisplatte
- 78: Längsseite
- 79: Tragstäbe

- 80: Generator
- 81: Generatorwelle
- 82: Tachogenerator
- 83: Bremszahnrad, Zahnrad
- 84: Antriebszahnrad, Zahnrad
- 85: Antriebswelle
- 86: Schutzbügel, Gehäuse

- 90: Rollenbahn
- 91: Gefällestrecke
- 92: Horizontalstrecke
- 93: Übergangstelle zwischen (91) und (92)
- 94: Stützen
- 95: Rahmengestell, Gestell
- 96: Längsträger

- 100: Transportrollen, unbremsbar
- 101: Transportrolle, Bremsrolle an (93), Antriebselement
- 102: Transportrollen, Bremsrollen oberhalb (93), Antriebselement
- 103: Bremsrollenwelle

- 105: Festlager, Kugellager
- 106: Wellenkupplung
- 107: Kupplungsflansch, bremsrollenseitig
- 108: Kupplungsflansch, generatorseitig
- 109: Doppelwinkel

- 121: Neigungssensor, Inklinometer
- 125: Bremswiderstand mit Kühlrippen, ohmscher Verbraucher

## Patentansprüche

1. Werkstücktransportsystem für das ungetaktete Fördern von durch Hangabtrieb bewegten Werkstücken (9) auf schienengeführten radgelagerten Transportwagen (60) oder auf rotierbar gelagerten Transportrollen (100-102) einer Rollenbahn (90), wobei ein Teil der Transportwagenräder (67, 68, 73) oder ein Teil der Transportrollen (100-102) der Rollenbahn (90) abbremsbar ist, **dadurch gekennzeichnet,**
- **dass** zwischen mindestens einem bremsbaren - durch den Werkstücktransport in Rotation versetzten - Transportwagenrad (68) und dem Fahrgestell (61) des Transportwagens (60) oder
**dass** zwischen einer bremsbaren - durch den Werkstücktransport in Rotation versetzten - Transportrolle (101, 102) und dem Rahmengestell (95) der Rollenbahn (90)
eine elektrische Maschine in Form eines Generators (80) angeordnet ist,
- **dass** der einzelne Generator (80) mit mindestens einem Bremswiderstand (125) beschaltet ist,

2. Werkstücktransportsystem gemäß Anspruch 1, **dadurch gekennzeichnet, dass** der Generator (80) in oder an dem durch den Werkstücktransport in Rotation versetzten einzelnen Transportwagenrad (68) oder der einzelnen Transportrolle (101, 102) angeordnet ist.

3. Werkstücktransportsystem gemäß Anspruch 1, **dadurch gekennzeichnet, dass** das rotierende Bauteil des Generators (80) entweder die induzierte Wicklung oder der induzierende Magnetfelderzeuger ist.

4. Werkstücktransportsystem gemäß Anspruch 1, **dadurch gekennzeichnet, dass** der induzierende Magnetfelderzeuger ein Permanentmagnet oder eine fremderregte Spule ist.

5. Werkstücktransportsystem gemäß Anspruch 1, **dadurch gekennzeichnet, dass** bei einem Generator (80) für Gleichstrom im Ankerkreis ein konstanter oder veränderlicher Bremswiderstand (125) angeordnet ist.

6. Werkstücktransportsystem gemäß Anspruch 1, **dadurch gekennzeichnet, dass** zwischen dem Antriebselement (68, 101, 102) und seinem Generator (80) ein in Schnelle übersetzendes Getriebe (83, 84) angeordnet ist.

7. Werkstücktransportsystem gemäß Anspruch 1, **dadurch gekennzeichnet, dass** zwischen dem Generator (80) und seinem Antriebselement (68, 101, 102) eine zumindest Fluchtungsfehler ausgleichende Wellenkupplung (106) angeordnet ist.

8. Werkstücktransportsystem gemäß Anspruch 1, **dadurch gekennzeichnet, dass** an jedem Transportwagen (60) mindestens ein Neigungssensor (121) oder mindestens ein Schalter angeordnet ist, wobei der Schalter ab einer einstellbaren Bahnneigung schaltet.

9. Werkstücktransportsystem gemäß Anspruch 1, **dadurch gekennzeichnet, dass** der Transportwagen (60) ein Fahrgestell (61) und mindestens eine mindestens ein Werkstück (9) aufnehmende Basisplatte (77) aufweist, wobei die Basisplatte (77) unterhalb der Fahrschiene (10) angeordnet ist.
